# FASCICULE DE BREVET EUROPEEN

(11) **EP 0 577 714 B1**
(45) Date de publication et mention de la délivrance du brevet: **14.06.1995**
(21) Numéro de dépôt: 92908980.3
(22) Date de dépôt: 26.03.1992
(51) Int. Cl.: C02F 3/04, C02F 3/06, C02F 3/12

(54) **REACTEUR ET PROCEDE DE TRAITEMENT, PAR VOIE BIOLOGIQUE, DE FLUIDES A DEPOLUER**
Reaktor und Verfahren zum biologischen Reinigen von schadstoffhaltigen Flüssigkeiten
DEVICE AND METHOD FOR BIOLOGICALLY TREATING FLUIDS TO BE DECONTAMINATED

(30) Priorité: 26.03.1991 FR 9103934
(43) Date de publication de la demande: 12.01.1994
(73) Titulaire: TERROM, Gérard, F-69930 S.-Clément-les-Places (FR)
(72) Inventeur: TERROM, Gérard, F-69930 S.-Clément-les-Places (FR)
(74) Mandataire: Ropital-Bonvarlet, Claude
(86) Numéro de dépôt international: FR9200274
(87) Numéro de publication internationale: WO9217409

(56) Documents cités:
- EP-A- 0 306 053
- DE-A- 3 524 364
- DE-U- 9 010 171
- US-A- 4 411 780

## Description

### DOMAINE TECHNIQUE :

La présente invention concerne un dispositif et un procédé de traitement par voie biologique de fluides à dépolluer.

La présente invention s'applique, aussi bien, au traitement d'effluents gazeux de tous types, tels que des polluants organiques, des polluants minéraux, des solvants organo-chlorés, présentant une concentration en phase organique très faible, du type mercaptans ou amines, qu'aux effluents liquides résultant de procédés de fabrication de type industriel, tels que des résidus de fabrication de fongicides, de pesticides ou autres et, plus généralement, à tous les produits toxiques de la chimie.

L'invention utilise les principes généraux bien connus de biotransformation résultant de la mise en contact d'un effluent contenant des substances organiques dissoutes avec des organismes ou micro-organismes qui se développent, soit en utilisant comme support nutritif les substances organiques qu'il convient précisément d'éliminer, soit des organelles cellulaires. Les organismes ou micro-organismes utilisés constituent ce que l'on appelle la biomasse, laquelle peut être constituée de tous types d'organismes cellulaires, tels que des bactéries, des champignons ou des levures, par exemple. Les organelles peuvent être des enzymes fixés par les techniques classiques.

### TECHNIQUE ANTERIEURE :

Il est déjà connu d'avoir recours à une biomasse de transformation fixée sur un support disposé à l'intérieur d'un réacteur. Un dispositif classique de l'art antérieur de ce type est, par exemple, décrit dans le document **FR-A-2 484 447** qui révèle une enceinte contenant une biomasse fixée sur des supports appropriés solidaires de l'intérieur de l'enceinte.

La masse liquide à dépolluer est introduite dans la partie supérieure de l'enceinte, par l'intermédiaire d'un **Venturi** disposé à l'extérieur de l'enceinte. Le liquide à dépolluer est mélangé à un gaz d'oxygénation ou autre débouchant, par une conduite, au niveau du col du **Venturi**, de manière à former une émulsion, phase liquide-phase gazeuse, dans le divergent du **Venturi**. L'émulsion ainsi réalisée parvient ensuite à un diffuseur disposé au-dessus du lit de biomasse et à partir duquel l'émulsion ou le mélange réalisé s'écoule par ruissellement gravitaire sur le lit de biomasse.

Il peut être considéré qu'un tel dispositif donne, sous certaines conditions, des résultats de biotransformation acceptables. Un tel dispositif souffre, néanmoins, de nombreux inconvénients.

En premier lieu, il convient de signaler l'encombrement important de tels réacteurs, puisque de nombreux organes annexes sont solidaires de l'extérieur du réacteur et, notamment, le système d'alimentation à **Venturi**.

Un second inconvénient réside dans l'étape même de mélange entre les phases gazeuse et liquide, dont le degré de mélange conditionne le succès et le rendement de l'opération de biotransformation. A cet égard, il s'avère que le transfert de masse, entre la phase gazeuse et la phase liquide, est insuffisant, en raison, notamment, du trajet commun réduit entre les deux phases et de l'utilisation et de la disposition inappropriées du **Venturi**. Il s'ensuit qu'un tel dispositif n'est pas à même de traiter des débits importants de liquides à dépolluer, en raison de la circulation trop faible des phases à l'intérieur de l'enceinte. Il s'avère, également, que le degré d'élimination des substances toxiques, lié à l'importance du transfert de masse est également insuffisant.

### EXPOSE DE L'INVENTION :

La présente invention vise, en conséquence, à proposer un nouveau dispositif et un nouveau procédé de traitement par voie biologique de fluides à dépolluer ne comportant pas les inconvénients énumérés ci-dessus et permettant de traiter rapidement de forts débits de fluides, tout en assurant un degré élevé d'élimination des composés néfastes ou toxiques.

Un autre objet de l'invention consiste à proposer un dispositif et un procédé de traitement ne nécessitant pas le recours à des éléments d'encombrement importants utilisables, en conséquence, dans un minimum de place et à un coût aussi faible que possible.

Un autre objet de l'invention consiste à fournir un dispositif et un procédé pouvant être utilisés, de manière indifférente, pour tout effluent fluide, qu'il soit en phase gazeuse ou en phase liquide.

Les objets assignés à l'invention sont atteints à l'aide d'un réacteur de traitement en continu et par voie biologique de fluides à dépolluer, comportant :
- des moyens d'alimentation et d'évacuation des fluides, l'un au moins des fluides étant gazeux et au moins un autre étant liquide,
- une enceinte de traitement définissant un axe longitudinal à l'intérieur de laquelle est disposé un biofiltre incluant un support de fixation de biomasse et présentant une limite inférieure et une limite supérieure, ledit support s'étendant dans la section transversale de l'enceinte et le long de l'axe longitudinal pour définir une limite inférieure et supérieure du biofiltre,
   caractérisé en ce qu'il comprend :
   - au moins une tuyère d'injection et de mélange des fluides, disposée sensiblement verticalement, concentrique au biofiltre et sensiblement de même hauteur que celui-ci, ladite tuyère formant un **Venturi**,
   - des moyens de déflexion associés à des moyens d'évacuation des fluides gazeux et montés dans l'enceinte au voisinage de la limite supérieure du biofiltre, prévus pour assumer l'évacuation d'au moins une partie des fluides gazeux du mélange et pour renvoyer le flux de fluides liquides, au moins en partie dégazés, vers le biofiltre, la limite supérieure du biofiltre constituant la voie d'entrée dudit flux de fluides liquides à dépolluer dans celui-ci, et sa limite inférieure la voie de sortie dudit flux de fluides liquides à dépolluer.

Les objets assignés à l'invention sont également atteints à l'aide d'un procédé de traitement en continu et par voie biologique à l'aide d'un biofiltre de fluides à dépolluer, dans lequel on mélange le fluide gazeux avec un autre fluide liquide, l'un au moins desdits fluides constituant un fluide à dépolluer, pour créer une émulsion phase liquide-phase gazeuse, caractérisé en ce qu'il consiste :
- à assurer le mélange, par passage des deux fluides selon une même direction, à l'intérieur d'une tuyère en forme de **Venturi**, concentrique au biofiltre et sensiblement de même hauteur que celui-ci,
- à projeter l'émulsion, de façon sensiblement simultanée, contre une surface déflectrice et à éliminer au moins une partie du fluide gazeux, de manière à la dégazer au moins en partie et à la faire passer, ainsi dégazée, au moins une fois et selon un flux descendant, au travers du garnissage du biofiltre,
- à assurer la dégradation des composés du fluide liquide à dépolluer par passage dans le biofiltre,
- à récupérer les phases gazeuse et liquide,
le biofiltre étant, en permanence, immergé partiellement, de préférence, sur une hauteur correspondant à 50-90 % de sa hauteur.

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES DESSINS :

La **fig. 1** montre, selon une coupe longitudinale transversale, un réacteur de traitement conforme à l'invention correspondant à une première variante de réalisation.

La **fig. 2** représente, selon une coupe longitudinale transversale, un réacteur de traitement conforme à l'invention représentant une seconde variante de réalisation.

La **fig. 3** représente, selon une coupe longitudinale transversale, une variante de réalisation d'un réacteur de traitement, dérivée de la variante montrée à la **fig. 1**.

La **fig. 4** montre, selon une coupe longitudinale transversale, une troisième variante de réalisation d'un réacteur conforme à l'invention.

La **fig. 5** montre une coupe transversale d'un réacteur effectuée selon la ligne **V-V** de la **fig. 1**.

La **fig. 6** montre une coupe transversale du réacteur effectuée selon la ligne **VI-VI** de la **fig. 3**.

### MEILLEURE MANIERE DE REALISER L'INVENTION :

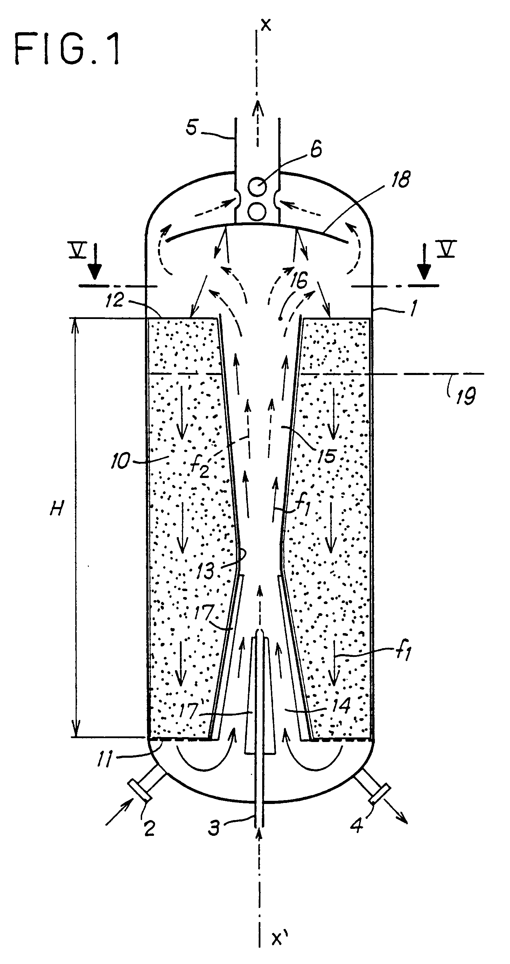

Le réacteur de traitement, montré à la **fig. 1**, comporte une enceinte **1** réalisée en tout matériau approprié et, par exemple, en un matériau métallique, préférentiellement de forme sensiblement cylindrique, définissant un axe principal longitudinal **x-x'** orienté sensiblement verticalement. L'enceinte **1** est solidaire d'un châssis support, non représenté sur les figures et destiné à permettre son installation verticale selon son axe principal **x-x'**.

L'enceinte **1** est en contact avec le milieu extérieur, par l'intermédiaire de moyens d'alimentation des fluides à traiter, tels que, par exemple, une conduite **2** d'alimentation en liquide débouchant, préférentiellement, dans la partie inférieure de l'enceinte **1** et reliée, par exemple, à une cuve, non représentée sur la **fig. 1**, contenant un effluent à traiter.

L'enceinte **1** comporte un second moyen d'alimentation consistant en une conduite d'alimentation en gaz **3**, tel que de l'air ou de l'oxygène ou un autre gaz débouchant à la partie inférieure de l'enceinte dans sa partie centrale, de préférence selon l'axe longitudinal **x-x'** et se prolongeant à l'intérieur du volume interne de l'enceinte **1**.

La conduite **3** est reliée à une buse d'injection, non représentée sur les figures, permettant l'injection sous pression du gaz à l'intérieur de l'enceinte **1**. Cette dernière est, également, reliée au milieu extérieur par l'intermédiaire de moyens d'évacuation des fluides comprenant une conduite d'évacuation **4** de la phase liquide disposée, de préférence, en partie basse de l'enceinte **1** et une colonne **5** d'évacuation de la phase gazeuse débouchant à l'extérieur dans la partie supérieure de l'enceinte, de préférence dans sa partie centrale.

La partie inférieure de la colonne **5**, débouchant dans l'enceinte **1**, est pourvue d'orifices **6** de passage pour la phase gazeuse, disposés à la périphérie de ladite colonne.

L'enceinte **1** comporte, également, un biofiltre **10**, de forme sensiblement annulaire, incluant un support de fixation, par exemple des anneaux de garnissage, pour la biomasse, ledit support s'étendant dans la section transversale de l'enceinte. Le biofiltre est solidaire, par son support, de la périphérie de la paroi interne de l'enceinte **1** et s'étend, selon l'axe **x-x'**, sur une hauteur **H** pour définir une limite inférieure **11** correspondant à une grille de support du biofiltre **10** s'étendant à distance de la partie inférieure de l'enceinte **1**.

Le biofiltre **10** comprend, également, une limite supérieure **12** s'étendant à distance de l'extrémité supérieure de l'enceinte **1**. Le biofiltre **10** est composé de supports classiques de fixation de biomasse ou d'organelles ou, encore, d'enzymes, qui peuvent être, par exemple, des anneaux **Rachig**, **Pall**, **Selles de Morh**, des billes de verre ou de polymères.

Les matières constitutives du garnissage du biofiltre peuvent être, comme cela est d'ailleurs bien connu de l'homme de l'art, aussi bien de l'acier, de la céramique, divers polymères synthétiques, comme le polypropylène ou polymères dérivés d'extraits végétaux, tels que les carraguenanes ou, encore, des minéraux bruts.

Le volume central sensiblement cylindrique de l'enceinte **1** est occupé par une tuyère d'injection **13**, coaxiale à l'axe, solidaire, de manière étanche, de la paroi centrale du biofiltre **10** et traversant, de part en part, le biofiltre **10** sur sa hauteur **H**. La tuyère **13** s'étend sensiblement verticalement et forme un **Venturi** définissant un convergent **14** en partie basse du biofiltre **10**, délimitant une entrée au droit de la grille **11** et un divergent **15** disposé en partie haute du biofiltre **10**, et consécutivement de l'enceinte **1**, et définissant une sortie **16** au droit de la limite supérieure **12** du biofiltre.

Des moyens de déflexion, tels qu'une plaque parabolique **18**, présentant sa concavité au-dessus et à distance de la sortie **16**, est montée à l'extrémité inférieure de la colonne **5**.

Avantageusement, des moyens de guidage et d'inflexion des fluides transitant dans la partie inférieure de l'enceinte **1** sont interposés dans le convergent **14**. Ces moyens peuvent être constitués d'au moins deux ailettes ou de pales fixes **17** solidaires de la face interne conique du convergent **14** et s'étendant longitudinalement et de manière hélicoïdale dans le convergent **14** et radialement vers l'axe longitudinal **x-x'**, de manière à initier un flux tourbillonnaire hélicoïdal d'injection.

Il est également possible, avantageusement, de prévoir de monter, selon le même principe que précédemment défini, des ailettes hélicoïdales **17'**, solidaires de la conduite d'alimentation **3** et s'étendant radialement et longitudinalement dans le convergent **14**, à partir de cette conduite, en direction des ailettes **17**.

De manière avantageuse, le biofiltre **10** est partiellement immergé dans la phase liquide contenue à l'intérieur de l'enceinte **1** et, de préférence, sur une hauteur telle que le niveau de liquide **19** correspond de 50 à 90 % de la hauteur **H** du biofiltre **10**.

Le procédé de traitement en continu de fluide ou effluent à dépolluer, par voie biologique, à l'aide du réacteur et du biofiltre montrés à la **fig. 1**, convient particulièrement bien pour le traitement d'effluents liquides contenant des charges organiques très diverses, ainsi que pour le traitement d'effluents gazeux contenant, par exemple, des composés organiques volatils comme des résidus de solvants ou de l'air contenant des composés malodorants.

Conformément à une première forme de mise en oeuvre du procédé suivant linvention, le fluide à dépolluer est uniquement le fluide liquide, le fluide gazeux faisant fonction de moyen d'aération et/ou d'entraînement du fluide liquide. Dans cette forme de mise en oeuvre, le procédé de traitement et l'utilisation du réacteur, montré à la **fig. 1**, consistent, après avoir introduit dans l'enceinte **1** du liquide à traiter par la conduite **2**, à injecter, par la conduite d'alimentation **3**, une phase gazeuse qui peut être un gaz d'oxygénation, tel que de l'air, en vue d'assurer le mélange des deux fluides. La mise en marche de la buse d'injection, placée en relation avec la conduite **3**, assure la circulation de la phase liquide et de la phase gazeuse de bas en haut à l'intérieur de la tuyère **13**, comme le matérialisent sur les figures les flèches **f₁** correspondant au trajet de la phase liquide et les flèches **f₂** en pointillé correspondant au trajet de la phase gazeuse.

En plus de l'entraînement mécanique de la phase liquide par la phase gazeuse injectée, un mélange intime de ces deux fluides est opéré par la forme en **Venturi** de la tuyère **13**. La diminution du diamètre de passage des fluides au niveau du col, entre le convergent **14** et le divergent **15**, provoque une accélération très importante de la vitesse de passage des fluides, ce qui permet, lors du passage des deux fluides selon une même direction, de créer une émulsion phase liquide-phase gazeuse et un contact étroit entre les deux phases. Ceci permet un transfert de masse important, entre la phase gazeuse et la phase liquide, de divers composés, tels que l'oxygène ou d'autres substances solubles dans la phase liquide. La quantité d'oxygène dissous en est ainsi augmentée.

Les moyens de guidage et d'inflexion, tels que les ailettes **17** et **17'**, augmentent de manière significative le transfert de masse par le mouvement tourbillonnaire imparti à la phase liquide conduisant à une agitation mécanique supplémentaire et à un allongement du trajet commun entre les deux phases. A la sortie de la tuyère **13**, l'émulsion phase liquide-phase gazeuse est projetée sur la parabole déflectrice **18** qui la rejette en flux descendant sur la limite supérieure **12** du biofiltre **10**, en sens inverse de la direction de passage dans la tuyère **13**, puis vers le garnissage non immergé du biofiltre **10** où la phase gazeuse et liquide se séparent.

L'action de projection sur la plaque déflectrice **18** amplifie, à nouveau, le transfert de masse entre les deux phases, tout en permettant une séparation de la majeure partie de la phase gazeuse qui est évacuée par la colonne **5** vers l'extérieur. Le maintien de la partie supérieure du remplissage du biofiltre, en position émergée, présente l'avantage, consécutivement à la phase précédente de contact entre les deux phases, de permettre une séparation aisée et progressive des deux phases vers la partie supérieure du garnissage composant le biofiltre **10**, de manière à freiner le moins possible la circulation descendante par percolation du liquide à travers le biofiltre **10** dans sa partie immergée.

Après cette séparation, la phase liquide ruisselle dans le garnissage du biofiltre **10** où les composés transférés et dissous dans ladite phase sont dégradés par la biomasse fixée, aussi bien dans la partie immergée qu'émergée.

Dans un tel dispositif et un tel procédé, le mélange phase liquide-phase gazeuse suit donc un double trajet inverse présentant un trajet ascendant et au moins un trajet descendant à l'intérieur de l'enceinte, selon des directions opposées parallèles à l'axe longitudinal **x-x'**.

A l'issue du fonctionnement du cycle de dégradation, les produits résultants, et en particulier la phase liquide traitée, sont évacués par le moyen d'évacuation **4**.

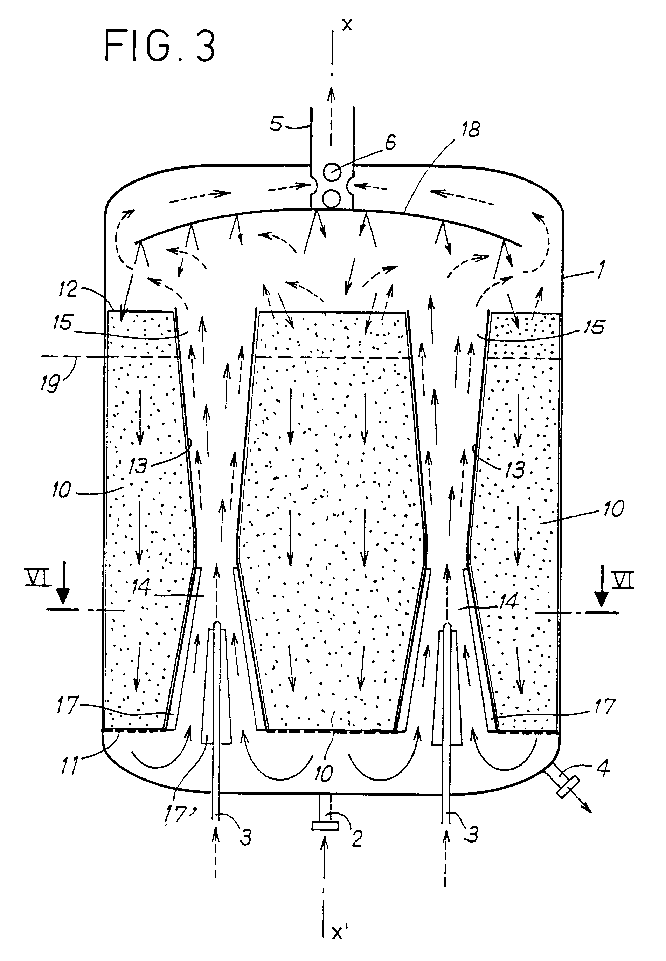

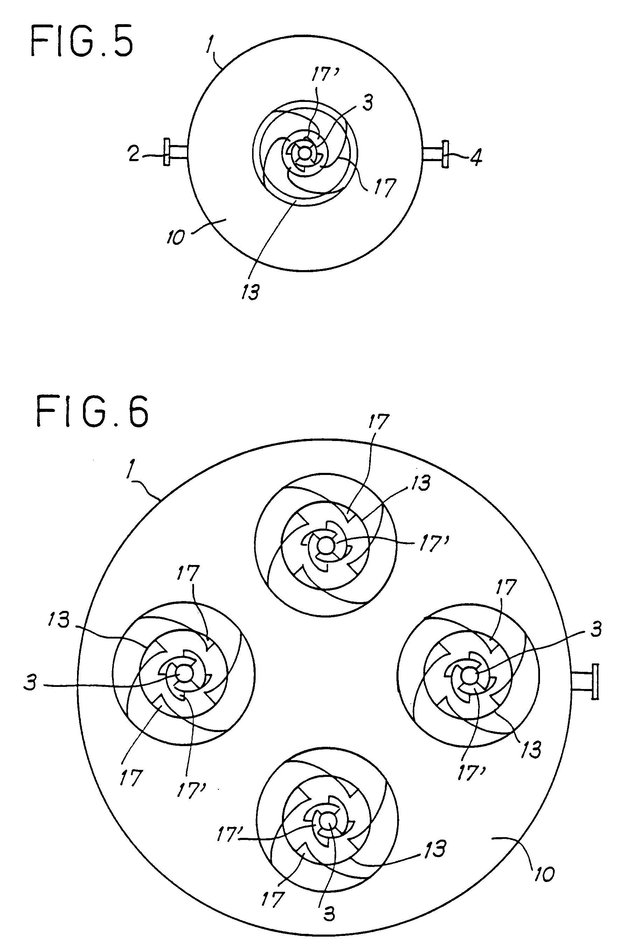

La **fig. 3** montre une variante de réalisation qui ne diffère de la variante montrée à la **fig. 1** que par la présence d'une pluralité de tuyères **13** et, de préférence, quatre, disposées dans le corps de l'enceinte **1**, autour de l'axe longitudinal **x-x'**. Dans l'exemple montré à la **fig. 6**, les axes longitudinaux de chaque tuyère **13** sont disposés sur un cercle concentrique à l'axe longitudinal **x-x'** de l'enceinte **1**. La totalité du volume de l'enceinte **1**, libre autour et entre les quatre tuyères **13**, est occupée par le biofiltre **10** chargé en biomasse.

De la même façon que dans la variante de réalisation montrée à la **fig. 1**, le niveau optimal de liquide **19** est maintenu à une hauteur comprise entre 50 et 90 % de la hauteur totale du garnissage du biofiltre **10**. Le mode de fonctionnement de la variante montrée à la **fig. 3** est identique à celui de la **fig. 1**. Les volumes de fluide à traiter peuvent être, cependant, beaucoup plus importants.

Conformément à une seconde forme de mise en oeuvre du procédé suivant l'invention, le fluide à dépolluer est le fluide gazeux. Dans cette seconde forme de mise en oeuvre, la dépollution est assurée, lors de l'étape de mélange des fluides, par lavage du fluide gazeux par le fluide liquide et transfert des composés polluants du fluide gazeux vers le fluide liquide, ce dernier étant alors dépollué par passage au travers du biofiltre.

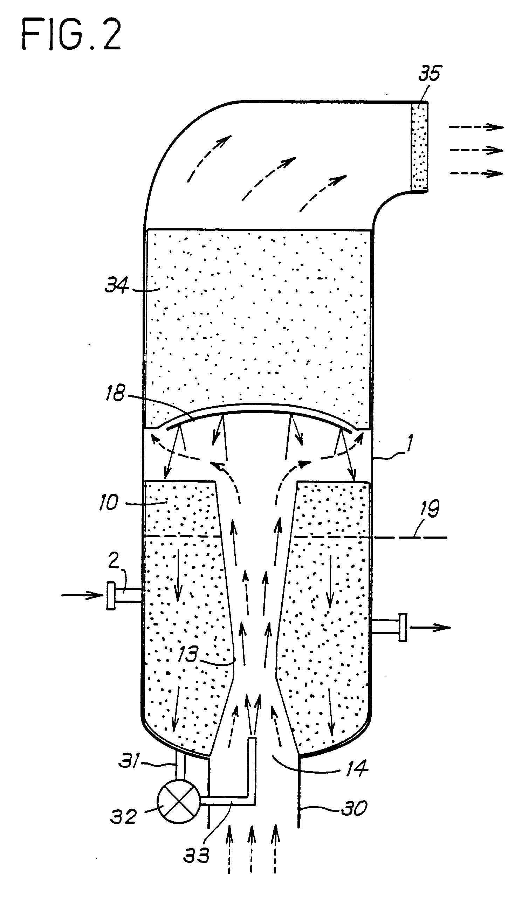

La variante de réalisation du dispositif suivant l'invention montrée à la **fig. 2** est plus particulièrement adaptée à la susdite seconde forme de mise en oeuvre du procédé suivant l'invention, c'est-à-dire au traitement par voie biologique d'effluents gazeux contenant des composés organiques volatils, par exemple des résidus de solvants ou de l'air contenant des substances malodorantes et pour lesquelles il est conseillé un débit de traitement élevé.

Le réacteur de traitement comprend une tubulure d'alimentation **30** en effluent gazeux à traiter débouchant directement dans la partie basse centrale de l'enceinte **1** en relation avec l'entrée du convergent **14** dont la limite inférieure correspond à la limite inférieure de l'enceinte **1** et du biofiltre **10**.

Les moyens de circulation de la phase liquide, arrivant par la conduite **2** et remplissant le biofiltre **10** jusqu'au niveau **19**, sont constitués par une tubulure de soutirage **31** de la phase liquide reliée, par une extrémité, à la partie inférieure du biofiltre **10** et, par une autre extrémité, à une ou plusieurs pompes de recyclage **32**. Cette dernière est elle-même reliée à une tubulure d'injection **33** débouchant dans le convergent **14** de la tuyère **13**. Le réacteur est complété par un garnissage **34** de transfert de masse assurant la séparation phase liquide-phase gazeuse, disposé dans l'enceinte **1**, au-dessus de la parabole déflectrice **18**.

Un dévésiculeur **35** assure, en partie haute de l'enceinte **1**, la filtration résiduelle de la phase gazeuse. De la même façon que pour les variantes précédentes, la circulation de l'air dans la tuyère **13** met en oeuvre l'entraînement mécanique de la phase liquide injectée dans la phase gazeuse, permettant, en combinaison avec l'effet d'accélération du **Venturi**, un transfert de masse important entre les deux phases.

Le mélange intime des phases liquides et gazeuses s'opère au niveau du flux ascendant dans la tuyère **13** et permet le lavage du fluide gazeux par le fluide liquide et le transfert de la charge polluante du fluide gazeux vers le fluide liquide. Ce dernier devient ainsi le fluide à dépolluer. L'opération de dépollution du fluide liquide s'effectue lors de la phase suivante de ruissellement, selon un flux descendant, du fluide à travers le biofiltre **10**.

Le transfert de masse, entre la phase gazeuse et la phase liquide, est amélioré par la présence, dans la partie supérieure de l'enceinte **1**, du garnissage **34** qui permet d'allonger le trajet commun entre les deux phases et donc de parfaire le transfert de composés à éliminer de la phase gazeuse vers la phase liquide. L'essentiel de la phase liquide de lavage à dépolluer est récupéré par ruissellement dans le remplissage **34** vers le biofiltre **10**.

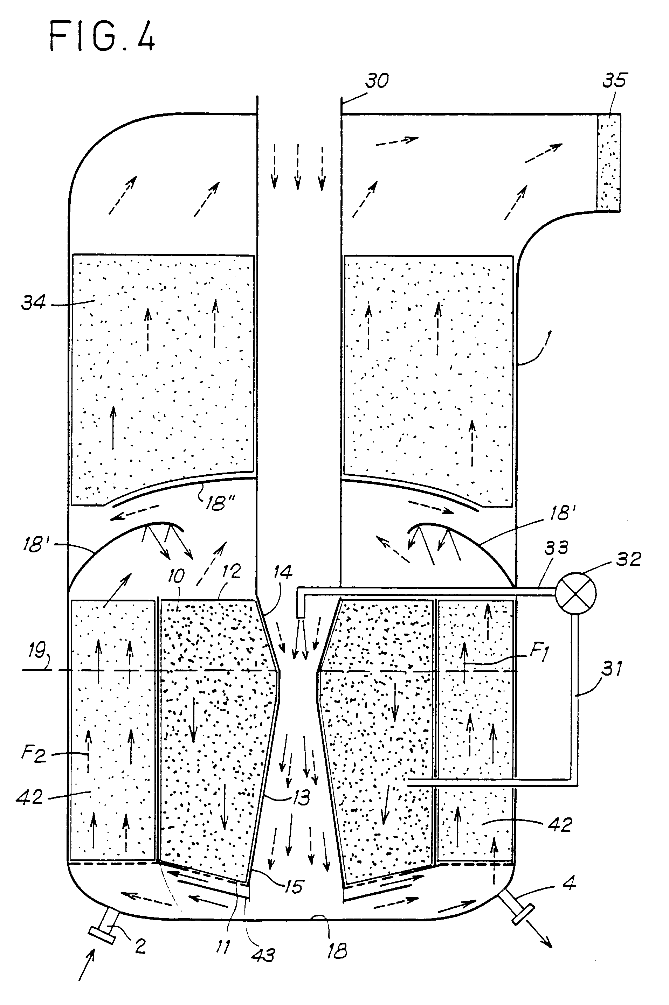

L'enceinte **1**, montrée à la **fig. 4**, diffère des variantes montrées aux figures précédentes par la disposition inversée de la tuyère **13** dans le corps d'enceinte **1**. Le convergent **14** est disposé en partie haute du biofiltre **10**, de manière que son entrée coïncide avec sa limite supérieure **12**.

Le divergent **15** est situé en partie basse du biofiltre et débouche à sa limite inférieure correspondant à la grille-support **11**, à distance du fond de l'enceinte **1**, assumant la fonction dévolue aux moyens de déflection **18**. Un garnissage annulaire **42** est disposé entre le biofiltre **10** et la paroi interne de l'enceinte **1**, ledit garnissage **42** s'étendant sur une hauteur sensiblement équivalente à celle du biofiltre **10**. Des moyens de déflection complémentaire **18'** et **18''**, tels que des plaques paraboliques ou des couronnes concaves, sont prévus au-dessus des limites supérieures du biofiltre et du garnissage **42**.

Avantageusement, le volume du garnissage extérieur **42** est au moins le double de celui du biofiltre **10**. Des plaques directionnelles **43** sont prévues en sortie du divergent **15** pour éviter à l'émulsion, renvoyée par le fond de l'enceinte, de pénétrer dans le biofiltre **10** à l'encontre du flux descendant liquide. Les moyens de circulation de la phase liquide sont équivalents à ceux de la variante montrée à la **fig. 2** et incluent une pompe de recyclage **32**, une tubulure de soutirage **31** de la phase liquide et une tubulure d'injection **33** dans la tuyère **13**.

L'effluent gazeux à traiter est introduit dans le convergent **14** par l'intermédiaire d'une conduite d'alimentation **30**, selon un flux descendant de haut en bas, tandis que la phase liquide est introduite, selon la même direction, par la tubulure **33**. La circulation de la phase gazeuse de haut en bas dans la tuyère **13** entraîne mécaniquement la phase liquide qui se mélange à la phase gazeuse sous l'effet de **Venturi**. En sortie du divergent **15**, l'émulsion est projetée sur la partie inférieure **18** du réacteur qui la rejette par l'intermédiaire des plaques directionnelles **43** vers le garnissage annulaire **42**, selon un flux ascendant.

Le transfert de masse entre les deux faces est ainsi amélioré à travers le garnissage annulaire **42**. En sortie du garnissage annulaire **42**, les plaques déflectrices **18'** et **18''** projettent la phase liquide, en grande partie dégazée et chargée des composés polluants provenant du fluide gazeux, vers le biofiltre **12** selon un flux descendant, tandis que la phase gazeuse est évacuée selon un flux ascendant vers la partie supérieure de l'enceinte, en direction du garnissage **34**. La phase liquide à dépolluer transite ensuite à travers le biofiltre **10**, par simple ruissellement gravitaire, et subit la dépollutionsouhaitée dans la biomasse.

La phase liquide est ensuite évacuée en partie basse du biofiltre **10** où elle peut être recyclée en combinaison avec la masse liquide sortant du divergent **15** vers la garniture annulaire extérieure **42**. Le réacteur conforme à la **fig. 4** est, plus particulièrement, destiné au traitement par voie biologique d'effluents gazeux contenant, par exemple, des résidus de solvants ou de l'air contenant des substances malodorantes. Ce réacteur combine une première phase de mélange des fluides dans la tuyère selon une direction descendante pour former un flux descendant, puis implique le passage de l'émulsion sur une garniture annulaire de transfert de phase selon une direction ascendante et, enfin, un troisième trajet correspondant à une phase de dégradation selon une direction descendante à travers le biofiltre. Ce réacteur combine donc un ensemble de trois trajets successivement en direction inversée de la phase liquide.

Le réacteur de traitement et le procédé de traitement décrits permettent donc d'améliorer fortement le transfert de masse entre les deux phases en allongeant les trajets communs entre les deux phases, tout en conservant un réacteur de dimensions réduites. Il s'avère également possible de traiter rapidement des volumes d'effluents importants, en raison de la vitesse de circulation élevée régnant dans l'enceinte et dans la tuyère à **Venturi**. L'amélioration de transfert entre les deux phases permet, également, de traiter des effluents présentant des concentrations élevées en polluants.

L'invention n'est pas limitée aux exemples décrits et représentés, car diverses modifications peuvent y être apportées sans sortir de son cadre.

### POSSIBILITE D'APPLICATION INDUSTRIELLE :

L'invention trouve une application préférée dans l'application aux dépolluants liquides ou gazeux.

## Revendications

1. Réacteur de traitement en continu et par voie biologique de fluides à dépolluer, comportant :
- des moyens d'alimentation (**2, 3, 30**) et d'évacuation (**4,5**) des fluides, l'un au moins des fluides étant gazeux et au moins un autre étant liquide,
- une enceinte (**1**) de traitement définissant un axe longitudinal (**x-x'**) à l'intérieur dlaquelle est disposé un biofiltre (**10**) incluant un support de fixation de biomasse et présentant une limite inférieure et une limite supérieure, ledit support s'étendant dans la section transversale de l'enceinte et le long de l'axe longitudinal pour définir une limite inférieure (**11**) et supérieure (**12**) du biofiltre (**10**),
caractérisé en ce qu'il comprend :
- au moins une tuyère d'injection et de mélange (**13**) des fluides, disposée sensiblement verticalement, concentrique au biofiltre (**10**) et sensiblement de même hauteur que celui-ci, ladite tuyère formant un **Venturi**,
- des moyens de déflexion (**18, 18', 18''**) associés à des moyens d'évacuation (**5**) des fluides gazeux et montés dans l'enceinte (**1**) au voisinage de la limite supérieure du biofiltre (**10**), prévus pour assumer l'évacuation d'au moins une partie des fluides gazeux du mélange et pour renvoyer le flux de fluides liquides, au moins en partie dégazés, vers le biofiltre (**10**), la limite supérieure (**12**) du biofiltre (**10**) constituant la voie d'entrée dudit flux de fluides liquides à dépolluer dans celui-ci, et sa limite inférieure (**11**) la voie de sortie dudit flux de fluides liquides à dépolluer.

2. Réacteur selon la revendication 1, caractérisé en ce que des moyens de guidage et d'inflexion (**17, 17'**) du flux de fluide injecté sont interposés dans le convergent (**14**) pour créer un flux hélicoïdal d'injection.

3. Réacteur selon la revendication 2, caractérisé en ce que les moyens de guidage et d'inflexion sont constitués d'ailettes (**17**) s'étendant radialement et longitudinalement à partir de la surface du convergent (**14**).

4. Réacteur selon la revendication 2 ou 3, caractérisé en ce que les moyens de guidage et d'inflexion sont constitués d'ailettes (**17'**) s'étendant radialement et longitudinalement dans le convergent (**14**), à partir des moyens d'alimentation (**3**) en fluides.

5. Réacteur selon l'une des revendications précédentes, caractérisé en ce que le convergent (**14**) de la tuyère (**13**) est situé à la partie inférieure (**11**) du biofiltre (**10**).

6. Réacteur selon la revendication 5, caractérisé en ce que les moyens d'alimentation comprennent une conduite (**3**) reliée à une buse d'injection d'un gaz, tel que de l'air, débouchant dans le convergent (**14**) et des conduites d'alimentation en liquide (**2**) débouchant dans l'enceinte, de préférence sous le biofiltre.

7. Réacteur selon la revendication 5, caractérisé en ce que les moyens d'alimentation comprennent, d'une part, une tubulure (**31**) de soutirage d'un fluide et, d'autre part, un ensemble de recyclage d'un liquide incluant une pompe (**32**) en relation avec la partie inférieure du biofiltre et avec une tubulure d'injection (**33**) dans le convergent (**14**).

8. Réacteur selon l'une des revendications 1 à 4, caractérisé en ce que le convergent (**14**) de la tuyère (**13**) est situé à la partie supérieure (**12**) du biofiltre (**10**) et en ce que, entre le biofiltre (**10**) et la paroi interne de l'enceinte (**1**), est interposé un garnissage annulaire (**42**) servant au transfert de phase et à la recirculation du fluide à partir des moyens de déflexion (**18**).

9. Réacteur selon la revendication 8, caractérisé en ce que le volume du garnissage annulaire (**42**) est au moins le double de celui du biofiltre (**10**).

10. Réacteur selon l'une des revendications précédentes, caractérisé en ce que les moyens de déflexion incluent des plaques paraboliques (**18, 18', 18''**).

11. Réacteur selon l'une des revendications précédentes, caractérisé en ce que le biofiltre (**10**) est partiellement immergé dans une phase liquide, de préférence sur 50 à 90 % de sa hauteur.

12. Réacteur selon l'une des revendications précédentes, caractérisé en ce que l'enceinte (**1**) comporte un remplissage (**34**) disposé en partie haute au-dessus des moyens de déflexion (**18**).

13. Procédé de traitement en continu par voie biologique et à l'aide d'un biofiltre, de fluides à dépolluer, dans lequel on mélange le fluide gazeux avec un autre fluide liquide, l'un au moins desdits fluides constituant un fluide à dépolluer pour créer une émulsion phase liquide-phase gazeuse,
caractérisé en ce qu'il consiste :
- à assurer le mélange, par passage des deux fluides selon une même direction, à l'intérieur d'une tuyère en forme de **Venturi**, concentrique au biofiltre et sensiblement de même hauteur que celui-ci,
- à projeter l'émulsion, de façon sensiblement simultanée, contre une surface déflectrice et à éliminer au moins une partie du fluide gazeux, de manière à la dégazer au moins en partie et à la faire passer, ainsi dégazée, au moins une fois et selon un flux descendant, au travers du garnissage du biofiltre,
- à assurer la dégradation des composés du fluide liquide à dépolluer par passage dans le biofiltre,
- à récupérer les phases gazeuse et liquide,
le biofiltre étant, en permanence, immergé partiellement, de préférence, sur une hauteur correspondant à 50-90 % de sa hauteur (**H**).

14. Procédé selon la revendication 13, caractérisé en ce qu'il consiste à créer un flux de mélange tourbillonnaire et hélicoïdal dans le convergent de la tuyère.

15. Procédé selon la revendication 13 ou 14, caractérisé en ce qu'il consiste :
- à assurer le mélange des fluides dans la tuyère selon une direction ascendante pour former un flux ascendant,
- et à faire passer, directement, après dégazage au moins partiel, par l'intermédiaire de moyens d'évacuation, et après projection sur la surface déflectrice, l'émulsion sur le biofiltre selon une direction descendante.

16. Procédé selon la revendication 13, caractérisé en ce qu'il consiste :
- à assurer le mélange des fluides dans la tuyère selon une direction descendante pour former un flux descendant,
- à faire passer l'émulsion sur un garnissage de transfert de phase selon une direction ascendante,
- et à faire passer l'émulsion sur le biofiltre selon une direction descendante, après dégazage au moins partiel, par l'intermédiaire de moyens d'évacuation, et après projection sur la surface déflectrice.

17. Procédé selon l'une quelconque des revendications 13 à 16, caractérisé en ce que le fluide à dépolluer est le fluide gazeux et en ce que, lors de l'étape de mélange des fluides, la dépollution est assurée par lavage du fluide gazeux par le fluide liquide et transfert des composés polluants du premier fluide vers le second, ce dernier étant alors dépollué par passage au travers du biofiltre.

18. Procédé selon l'une quelconque des revendications 13 à 16, caractérisé en ce que le fluide à dépolluer est uniquement le fluide liquide, le fluide gazeux faisant fonction de moyen d'aération et/ou d'entraînement du fluide liquide.

## Claims

1. Reactor for continuous biological treatment of fluids to be depolluted, comprising:
- fluid means (2, 3, 30) and fluid evacuation means (4, 5), at least one of the fluids being a gas and at least another fluid being a liquid, and
- a treatment enclosure (1) defining a longitudinal axis (x-x') having a biofilter (10) disposed therein, the biofilter including a biomass fixing support and having a bottom limit and a top limit, said support extending across the cross-section of the enclosure and along the longitudinal axis to define a bottom limit (11) and a top limit (12) of the biofilter (10);
characterized in that it comprises:
- at least one fluid injection and mixing nozzle (13) disposed substantially vertically, concentrically with the biofilter (10) and of substantially the same height, said nozzle forming a venturi; and
- deflection means (18, 18', 18'') associated with the means (5) for evacuating gases and mounted inside the enclosure (1) in the vicinity of the top limit of the biofilter (10), said means being designed to evacuate at least a portion of the gases in the mixture and to return the flow of the at least partially degassed liquids towards the biofilter (10), the top limit (12) of the biofilter (10) constituting the inlet path for said flow of liquids to be depolluted therein, and its bottom limit (11) constituting the outlet path for said flow of liquids to be depolluted.

2. Reactor according to claim 1, characterized in that guiding and turning means (17, 17') for guiding and turning the injected fluid flow are interposed in the converging portion (14) to establish a helical injection flow.

3. Reactor according to claim 2, characterized in that the guiding and turning means are constituted by fins (17) extending radially and longitudinally from the surface of the converging portion (14).

4. Reactor according to claim 2 or 3, characterized in that the guiding and turning means are constituted by fins (17') extending radially and longitudinally into the converging portion (14) from the fluid feed means (3).

5. Reactor according to one of the preceding claims, characterized in that the converging portion (14) of the nozzle (13) is situated in the lower portion (11) of the biofilter (10).

6. Reactor according to claim 5, characterized in that the feed means comprise a duct (3) connected to an outlet for injecting a gas, such as air, opening out into the converging portion (14), and liquid feed ducts (2) opening out into the enclosure, preferably beneath the biofilter.

7. Reactor according to claim 5, characterised in that the feed means comprise, firstly, a pipe (31) for drawing off a fluid and, secondly, an assembly for recycling a liquid, the assembly including a pump (32) in communication with the lower portion of the biofilter and with a pipe (33) for injecting into the converging portion (14).

8. Reactor according to any one of claims 1 to 4, characterized in that the converging portion (14) of the nozzle (13) is situated in the upper portion (12) of the biofilter (10) and in that, an annular lining (42) is interposed between the biofilter (10) and the inside wall of the enclosure (1), the annular lining serving to transfer phase and to recirculate fluid from the deflection means (18).

9. Reactor according to claim 8, characterized in that the volume of the annular lining (42) is at least twice the volume of the biofilter (10).

10. Reactor according to one of the preceding claims, characterized in that the deflection means include parabolic plates (18, 18', 18'').

11. Reactor according to one of the preceding claims, characterized in that the biofilter (10) is partially immersed in a liquid, preferably over 50% to 90% of its height.

12. Reactor according to one of the preceding claims, characterized in that the enclosure (1) includes a lining (34) disposed in the upper portion thereof above the deflection means (18).

13. Method of continuous biological treatment of fluids to be depolluted by means of a biofilter, in which a gaseous fluid is mixed with another fluid that is liquid, the mixing serving to create a liquid-gas emulsion, at least one of said fluids constituting a fluid to be depolluted; characterized in that it consists:
- in performing the mixing by causing both fluids to pass in the same direction through a venturi noble that is concentric with the biofilter and that extends over substantially the same height,
- in substantially simultaneously directing the emulsion against a deflecting surface and in eliminating at least a portion of the gas so as to degas the emulsion, at least in part, and causing it, when degassed in this way, to pass at least once in a downward flow through the biofilter lining,
- in degrading the compounds of the liquid to be depolluted by passing it through the biofilter; and
- in recovering the gas and the liquid, with the biofilter, while being permanently immersed in part, preferably over 50% to 90% of its height (H).

14. Method according to claim 13, characterized in that it consists in creating a turbulent and helical flow of the mixture in the converging portion of the nozzle.

15. Method according to claim 13 or 14, characterized in that it consists:
- in causing the fluids to mix inside the noble in an upward direction so as to form an upward flow, and
- in causing the emulsion to pass directly through the biofilter in a downward direction after being degassed at least in part by evacuation means and after being directed against the deflecting surface.

16. Method according to claim 13, characterized in the it consists:
- in causing the mixing of the fluids in the nozzle in a downward direction so as to form a downward flow,
- in causing the emulsion to pass through a mass transfer lining in an upward direction, and
- in causing the emulsion to pass through the biofilter in a downward direction after it has been at least partially degassed, via evacuation means and after being directed against the deflecting surface.

17. Method according to any one of claims 13 to 16, characterized in that the fluid to be depolluted is the gas and in that during the step of mixing the fluids, depollution is provided by the gas being washed by the liquid and by polluting compounds being transferred from the first fluid to the second, with the second then being depolluted by passing through the biofilter.

18. Method according to any one of claims 13 to 16, characterized in that the fluid to be depolluted is solely the liquid, the gas serving as means for aerating and/or entraining the liquid.

## Patentansprüche

1. Reaktor zum kontinuierlichen biologischen Behandeln von zu entkontaminierenden Fluiden mit:
- Zufuhreinrichtungen (2, 3, 30) und Abfuhreinrichtungen (4, 5) für die Fluide, von denen Wenigstens eines gasförmig und ein anderes flüssig ist,
- einem Behandlungsbehälter (1), der eine Längsachse (x-x') definiert und in dessen Innerem ein Biofilter (10) angeordnet ist, der einen Träger zur Befestigung von Biomasse enthält und eine untere und eine obere Grenze aufweist, und der sich im Querschnitt und entlang der Längsachse erstreckt, um eine untere Grenze (11) und eine obere Grenze (12) des Biofilters (10) zu definieren,
dadurch **gekennzeichnet,** daß er
- Wenigstens eine Einspritz- und Mischdüse (13) für die Fluide umfaßt, die im wesentlichen vertikal und konzentrisch zum Biofilter (10) angeordnet ist, im wesentlichen dieselbe Höhe wie diese hat und einen Venturikanal bildet, und
- Ablenkeinrichtungen (18, 18', 18'') umfaßt, die Abfuhreinrichtungen (5) für die gasförmigen Fluide zugeordnet sind, im Behälter (1) in der Nähe der oberen Grenze des Biofilters (10) montiert sind und vorgesehen sind, um die Abführung wenigstens eines Teils der gasförmigen Fluide des Gemischs sicherzustellen und die Strömung der wenigstens teilweise entgasten flüssigen Fluide zum Biofilter (10) hin abzulenken, wobei die obere Grenze (12) des Biofilters (10) den Eingangskanal für die Strömung der zu entkontaminierenden flüssigen Fluide in diesen und seine untere Grenze (11) den Ausgans-kanal für die Strömung der zu entkontaminierenden flüssigen Fluide darstellt.

2. Reaktor nach Anspruch 1,
dadurch gekennzeichnet, daß
Führungs- und Ablenkeinrichtungen (17, 17') für die eingespritzte Fluidströmung im Verjüngungsabschnitt (14) angeordnet sind, um eine schraubenlinienförmige Einspritzströmung zu erzeugen.

3. Reaktor nach Anspruch 2,
dadurch gekennzeichnet, daß
die Führungs- und Ablenkeinrichtungen Stege (17) umfassen, die sich radial und longitudinal von der Oberfläche des Verjüngungsabschnitts (14) aus erstrecken.

4. Reaktor nach Anspruch 2 oder 3,
dadurch gekennzeichnet, daß
die Führungs- und Ablenkeinrichtungen Stege (17') umfassen, die sich im Verjüngungsabschnitt (14) von den Fluidzufuhreinrichtungen (3) aus radial und longitudinal erstrecken.

5. Reaktor nach einem der vorhergehenden Ansprüche,
dadurch gekennzeichnet, daß
der Verjüngungsabschnitt (14) der Düse (13) im unteren Bereich (11) des Biofilters (10) liegt.

6. Reaktor nach Anspruch 5,
dadurch gekennzeichnet, daß
die Zufuhreinrichtungen eine Leitung (3), die mit einer Einspritzdüse für ein Gas wie etwa Luft verbunden ist, die in den Verjüngungsabschnitt (14) mündet, und Zufuhrleitungen (2) für Flüssigkeit umfassen, die in den Behälter, vorzugsweise unterhalb des Biofilters, münden.

7. Reaktor nach Anspruch 5,
dadurch gekennzeichnet, daß
die Zufuhreinrichtungen eine Fluidabziehleitung (31) und eine Flüssigkeitsaufbereitungsanordnung mit einer Pumpe (32) in Beziehung zum unteren Bereich des Biofilters und einer Einspritzleitung (33) zum Einspritzen in den Verjüngungsabschnitt (14) umfassen.

8. Reaktor nach einem der Ansprüche 1 bis 4,
dadurch gekennzeichnet, daß
der Verjüngungsabschnitt (14) der Düse (13) im oberen Bereich (12) des Biofilters (10) liegt und daß zwischen dem Biofilter (10) und der Innenwand des Behälters (1) eine ringförmige Auskleidung (42) angebracht ist, die zum Phasenübergang und zur Rückführung des Fluids von den Ablenkeinrichtungen (18) dient.

9. Reaktor nach Anspruch 8,
dadurch gekennzeichnet, daß
das Volumen der ringförmigen Auskleidung (42) wenigstens doppelt so groß wie das des Biofilters (10) ist.

10. Reaktor nach einem der vorhergehenden Ansprüche,
dadurch gekennzeichnet, daß
die Ablenkeinrichtungen parabolische Platten (18, 18', 18'') umfassen.

11. Reaktor nach einem der vorhergehenden Ansprüche,
dadurch gekennzeichnet, daß
der Biofilter (10) teilweise, vorzugsweise über 50 bis 90 % seiner Höhe, in eine flüssige Phase eingetaucht ist.

12. Reaktor nach einem der vorhergehenden Ansprüche,
dadurch gekennzeichnet, daß
der Behälter (1) eine im oberen Bereich oberhalb der Ablenkeinrichtungen (18) angeordnete Füllung (34) aufweist.

13. Verfahren zum kontinuierlichen biologischen Behandeln von zu entkontaminierenden Flüssigkeiten mit Hilfe eines Biofilters, bei dem ein gasförmiges Fluid mit einem anderen, flüssigen Fluid gemischt wird, um eine Gas-Flüssigkeit-Emulsion zu erzeugen, wobei wenigstens eines der Fluide ein zu entkontaminierendes Fluid darstellt, gekennzeichnet durch die Schritte:
- Vermischen der beiden Fluide durch Hindurchführen in gleicher Richtung durch das Innere einer Venturidüse, die konzentrisch zum Biofilter ist und im wesentlichen dieselbe Höhe wie dieser besitzt,
- die Emulsion im wesentlichen gleichzeitig gegen eine Ablenkoberfläche zu schleudern und wenigstens einen Teil des gasförmigen Fluids zu eliminieren, um die Emulsion so wenigstens teilweise zu entgasen und sie in entgaster Form wenigstens einmal und als absteigende Strömung durch die Auskleidung des Biofilters hindurchzuführen,
- den Abbau der Verbindungen des zu entkontaminierenden flüssigen Fluids durch Durchgang durch den Biofilter zu bewirken, und
- die gasförmige und die flüssige Phase wiederzugewinnen,
wobei der Biofilter dauernd teilweise, vorzugsweise auf 50 bis 90 % seiner Höhe, untergetaucht ist.

14. Verfahren nach Anspruch 13,
dadurch gekennzeichnet, daß
im Verjüngungsabschnitt der Düse eine wirbelnde, schraubenlinienförmige Mischströmung erzeugt wird.

15. Verfahren nach Anspruch 13 oder 14,
dadurch gekennzeichnet, daß
- die Vermischung der Fluide in der Düse in ansteigender Richtung bewirkt wird, um eine ansteigende Strömung zu bilden, und
- die Emulsion direkt nach wenigstens teilweiser Entgasung mittels Abfuhreinrichtungen und nach Schleudern auf die Ablenkoberfläche in absteigender Richtung über den Biofilter geführt wird.

16. Verfahren nach Anspruch 13,
dadurch gekennzeichnet, daß
- die Durchmischung der Fluide in der Düse in absteigender Richtung bewirkt wird, um eine absteigende Strömung zu bilden,
- die Emulsion in ansteigender Richtung über eine Auskleidung für den Phasenübergang geführt wird, und
- die Emulsion nach wenigstens teilweiser Entgasung mittels Abfuhreinrichtungen und nach Schleudern auf die Ablenkoberfläche in absteigender Richtung über den Biofilter geführt wird.

17. Verfahren nach einem der Ansprüche 13 bis 16,
dadurch gekennzeichnet, daß
das zu entkontaminierende Fluid das gasförmige Fluid ist, und daß beim Schritt des Mischens der Fluide die Entkontaminierung durch Auswaschen des gasförmigen Fluids mit dem flüssigen Fluid und den Übergang der Schadstoffverbindungen vom ersten zum zweiten Fluid bewirkt wird und letzteres durch Durchgang durch den Biofilter entkontaminiert wird.

18. Verfahren nach einem der Ansprüche 13 bis 16,
dadurch gekennzeichnet, daß
das zu entkontaminierende Fluid allein das flüssige Fluid ist und das gasförmige Fluid als Mittel zum Belüften und/oder Antreiben des flüssigen Fluids dient.
